# FASCICULE DE BREVET EUROPEEN

(11) **EP 1 974 357 B1**
(45) Date de publication et mention de la délivrance du brevet: **15.04.2009**
(21) Numéro de dépôt: 07712081.4
(22) Date de dépôt: 23.01.2007
(51) Int. Cl.: G21C 19/46, G21F 9/36

(54) **PROCEDE ET DISPOSITIF DE FERMETURE EN PISCINE D'UN ETUI CHARGE AVEC DU COMBUSTIBLE NUCLEAIRE IRRADIE**
VERFAHREN UND EINRICHTUNG ZUM SCHLIESSEN EINES BELADENEN BEHÄLTERS MIT BESTRAHLTEM KERNBRENNSTOFF IN EINEM WASSERGEFÜLLTEN POOL
METHOD AND DEVICE FOR CLOSING IN A WATER-FILLED POOL A LOADED CASE WITH IRRADIATED NUCLEAR FUEL

(30) Priorité: 25.01.2006 FR 0650258
(43) Date de publication de la demande: 01.10.2008
(73) Titulaire: Commissariat à l'Energie Atomique, 75015 Paris (FR)
(72) Inventeur: BONTEMPS, Virginie, F-84000 Avignon (FR); ARGOUD, Jean-Claude, F-38330 Montbonnot (FR)
(74) Mandataire: Ilgart, Jean-Christophe
(86) Numéro de dépôt international: PCT/EP2007/050625
(87) Numéro de publication internationale: WO 2007/085586

(56) Documents cités:
- DE-A1- 2 531 410
- DE-A1- 2 706 042
- DE-U1- 8 906 938
- FR-A- 2 806 828

## Description

La présente invention se rapporte à un procédé de conditionnement de combustible nucléaire irradié en piscine et à un dispositif de fermeture en piscine d'étuis contenant du combustible nucléaire irradié, en vue de leur entreposage ou de leur retraitement, voire de leur stockage en site profond.

Dans le cadre de la gestion des combustibles irradiés, après leur utilisation en réacteur, ceux-ci subissent une étape de refroidissement en piscine dans un bâtiment, dit bâtiment combustible, qui se trouve généralement à côté du bâtiment réacteur.

A la fin de cette étape de refroidissement, les combustibles irradiés sont retirés de la piscine, puis évacués vers un lieu d'entreposage en attente d'un exutoire définitif qui peut être soit le retraitement, soit le stockage géologique.

L'étape de refroidissement en piscine est d'une durée limitée du fait de la capacité réduite des piscines de refroidissement.

Dans ce cadre, il est alors envisagé de conditionner les combustibles irradiés dans des étuis formant la première barrière de confinement, chaque étui étant lui-même disposé dans un container formant une deuxième barrière de confinement et assurant la tenue mécanique de l'ensemble. Ce container est destiné au transport de l'étui vers son lieu d'entreposage provisoire.

A l'heure actuelle, le conditionnement des combustibles nucléaires irradiés s'effectue dans des cellules chaudes, qui assurent le confinement et la protection contre les rayonnements par des parois blindées. Ces cellules chaudes présentent l'inconvénient d'être de construction lourde et coûteuse.

Il est également connu du document FR 2 806 828, un dispositif de fermeture sous eau d'un étui de combustible irradié comportant une cloche destinée à venir recouvrir de manière étanche une extrémité ouverte de l'étui de manière étanche, un robot étant amené dans· la cloche par un tube, reliant la cloche à l'environnement extérieur, ce robot étant destiné à fixer le bouchon sur l'étui.

Le dispositif permet d'amener un tube pour aspirer l'eau contenue dans l'étui avant la mise en place du bouchon.

Ce dispositif et son procédé associé ne permettent pas un conditionnement de combustible nucléaire sûr, puisque aucune vérification de l'étanchéité de la fermeture de l'étui n'est effectuée. En outre, lorsque le combustible irradié est sorti de la piscine, une seule protection biologique formée par l'étui le sépare de l'environnent extérieur.

En outre, la cloche est reliée à l'environnement extérieur par un canal permettant le passage, notamment du moyen de soudage. Ainsi l'étanchéité aux rayonnements est difficile à mettre en oeuvre.

Le document DE 8906938 décrit une installation pour enfermer du combustible nucléaire dans un étui, cette installation étant disposée dans un bassin.

Cette installation en deux parties, comporte un logement cylindrique inférieur dans lequel est disposé directement l'étui avant son remplissage avec le combustible et une cloche recouvrant le haut du container. Le logement inférieur comporte dans son fond une évacuation de l'eau contenu dans l'étui.

Ce stockage n'offre qu'une seule barrière biologique formée par l'étui.

En outre, cette installation est très encombrante et difficile à manipuler, notamment à transporter pour être mise en oeuvre dans d'autres piscines.

Par ailleurs, aucune vérification de l'étanchéité de la fermeture du container n'est décrite.

C'est par conséquent un but de la présente invention d'offrir un procédé de conditionnement de combustible nucléaire irradié permettant un stockage à l'air libre sans risque de rayonnement.

C'est également un but de la présente invention d'offrir un dispositif permettant de conditionner en piscine du combustible nucléaire irradié de manière sûre et dans un conditionnement assurant une double protection biologique.

C'est également un but de la présente invention d'offrir un dispositif de fermeture d'étui en piscine de coût de revient faible relativement aux dispositifs connus.

### EXPOSÉ DE L'INVENTION

Les buts précédemment énoncés sont atteints par un procédé de conditionnement en piscine de combustible nucléaire, comportant les étapes :
- d'immersion dans la piscine d'un étui disposé dans un container,
- de mise en place du dispositif de fermeture au dessus du container,
- d'abaissement du niveau de l'eau dans le dispositif d'abaissement à un niveau inférieur à une extrémité ouverte du container,
- de fixation d'un bouchon sur l'étui,
- de retrait de l'eau dans l'étui,
- de vérification de l'étanchéité de la fermeture.

Un dispositif selon la présente invention comporte une cloche apte à recouvrir le container recevant l'étui, la cloche étant munie de moyens de fixation du bouchon sur l'étui, de vidange et de séchage de l'étui, de vérification de l'absence d'eau dans l'étui et de l'étanchéité de la fermeture obtenue par le bouchon.

La cloche est entreposée dans la piscine et est disposée au dessus d'un container pour le recouvrir lors du conditionnement de combustible nucléaire.

Le dispositif selon la présente invention présente l'avantage d'être facilement transportable. Il permet de conditionner des combustibles directement dans leur piscine d'entreposage, ainsi l'utilisation de moyen lourd, comme une cellule chaude, n'est plus nécessaire. Le coût d'exploitation d'un tel dispositif est donc réduit.

En outre, le conditionnement directement en piscine permet de bénéficier de la protection biologique opérée par l'eau et évite le transport de combustible irradié sans protection biologique et mécanique complètement sûre.

La cloche comporte les équipements qui permettent de sécher les éléments combustibles, de réaliser le soudage d'un couvercle étanche sur l'étui et le contrôle de l'étanchéité de la fermeture. Toutes les opérations sont réalisées à distance et sous eau.

La présente invention a alors principalement pour objet un procédé de conditionnement en piscine de combustible nucléaire dans un étui contenu dans un container, comportant les étapes :
- immersion du container et de l'étui dans la piscine,
- chargement de l'étui avec du combustible nucléaire,
- mise en place d'un dispositif de fermeture de l'étui au dessus du container, ledit dispositif comportant au moins un premier bouchon d'étui,
- maintien d'une pression de fluide pneumatique dans le dispositif de manière à maintenir le niveau de l'eau à un niveau inférieur à une extrémité ouverte du l'emballage,
- fixation d'un bouchon sur une extrémité ouverte de l'étui par un moyen contenu dans le dispositif,
- vidange de l'étui par un moyen de vidange contenu dans le dispositif,
- vérification de l'étanchéité de la fermeture réalisée par le bouchon,
- retrait du dispositif.

Lors de la vidange de l'étui, il est prévu un retrait de l'eau au moyen d'une pompe, puis un balayage de gaz dans l'étui pour sécher l'intérieur de l'étui.

De manière avantageuse, en fin de vidange une vérification de l'absence d'eau dans l'étui est effectuée, par exemple par une mesure de remontée de pression.

Le contrôle de l'étanchéité de la fermeture peut comporter :
- un balayage à l'hélium de l'intérieur de l'étui et mise sous pression de l'intérieur de l'étui avec de l'hélium,
- une mise en oeuvre d'un spectromètre à hélium pour détecter une éventuelle fuite d'hélium.

De manière préférée, la fixation du premier bouchon s'effectue par soudage.

Un deuxième bouchon contenu dans le dispositif de fermeture, est avantageusement fixé sur le premier bouchon avant le rentrait du dispositif de fermeture, celui-ci peut comporter des moyens de préhension.

Il peut également être prévu de mettre en place un bouchon sur le container après retrait du dispositif de fermeture.

De manière très avantageuse, l'emballage et le dispositif de fermeture sont disposés l'un par rapport à l'autre dans une position relative déterminée, permettant notamment une automatisation du procédé de fermeture.

La présente invention a également pour objet un dispositif de fermeture en piscine d'un étui disposé dans un container, ledit étui étant chargé avec un combustible irradié, comportant une cloche, au moins un premier bouchon muni de connecteurs, des moyens pour mettre en place ledit bouchon sur l'étui, des moyens de fixation du bouchon sur l'étui, des moyens de retrait de l'eau, des moyens de vérification du retrait total de l'eau et de moyens de contrôle de l'étanchéité de la fermeture de l'étui sur le bouchon.

Le dispositif de fermeture peut comporter un bras formant les moyens de mise en place du bouchon sur l'étui.

Les moyens de vidange peuvent comporter une pompe et un moyen pour effectuer un balayage sous gaz de l'étui afin de le sécher, ladite pompe et ledit moyen de balayage étant connectables à au moins un connecteur.

De manière préférée, les moyens de vérification de l'étanchéité comportent un moyen pour injecter de l'hélium dans l'étui et un spectromètre à hélium ; le moyen pour injecter de l'hélium est connectable à au moins un connecteur.

Les moyens de fixation sont avantageusement des moyens de soudage, ces moyens étant amenés à proximité de l'étui par un bras contenu dans la cloche.

De manière avantageuse, le dispositif de fermeture peut contenir un dispositif de stockage de plusieurs premiers bouchons, permettant la fermeture de plusieurs étuis sans avoir à remonter le dispositif de fermeture.

Le dispositif de fermeture peut également comporter un dispositif de stockage de plusieurs deuxièmes bouchons destinés à être fixés sur les premiers bouchons.

### BRÈVE DESCRIPTION DES DESSINS

La présente invention sera mieux comprise à l'aide de la description qui va suivre et des dessins annexés, sur lesquels :
- les figures 1A et 1B sont des représentations schématiques du cadre de la mise en oeuvre du procédé et du dispositif selon la présente invention dans un mode de repos et un mode de fermeture respectivement,
- la figure 2 est un diagramme des différentes étapes du procédé selon la présente invention,
- la figure 3 est une vue en coupe longitudinale d'un dispositif de chargement selon la présente invention.

### EXPOSÉ DÉTAILLÉ DE MODES DE RÉALISATION PARTICULIERS

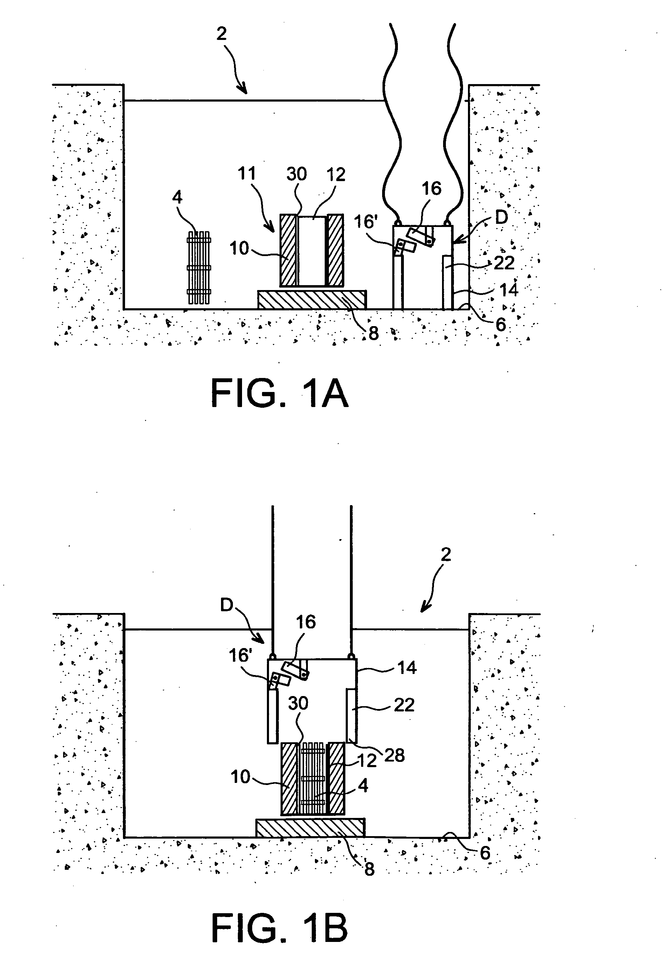

Sur les figures 1A et 1B, on peut voir une piscine 2 remplie d'eau dans laquelle sont entreposés des combustibles nucléaires 4 irradiés pour leur refroidissement. Ces combustibles peuvent être sous forme d'assemblage de plusieurs crayons de combustible ou des combustibles en plaques ou toute autre forme.

Cette piscine peut recevoir un dispositif de fermeture D selon la présente invention qui peut être maintenu immergé dans la piscine même en l'absence d'utilisation de celui-ci.

La piscine 2 comporte un fond 6 pourvu d'un socle 8 pour recevoir un container 10 dans lequel est disposé un étui 12. Cet étui 12 est destiné à contenir le combustible irradié et forme une première barrière de confinement, le container 10 quant à lui forme une deuxième barrière de confinement et assure également le maintien mécanique de l'ensemble.

Le container 10 est destiné à assurer le confinement biologique et sa protection mécanique lors de son transport vers un lieu d'entreposage.

Dans la suite de la description, l'ensemble container 10 et étui 12 sera appelé emballage et indiqué par la référence 11.

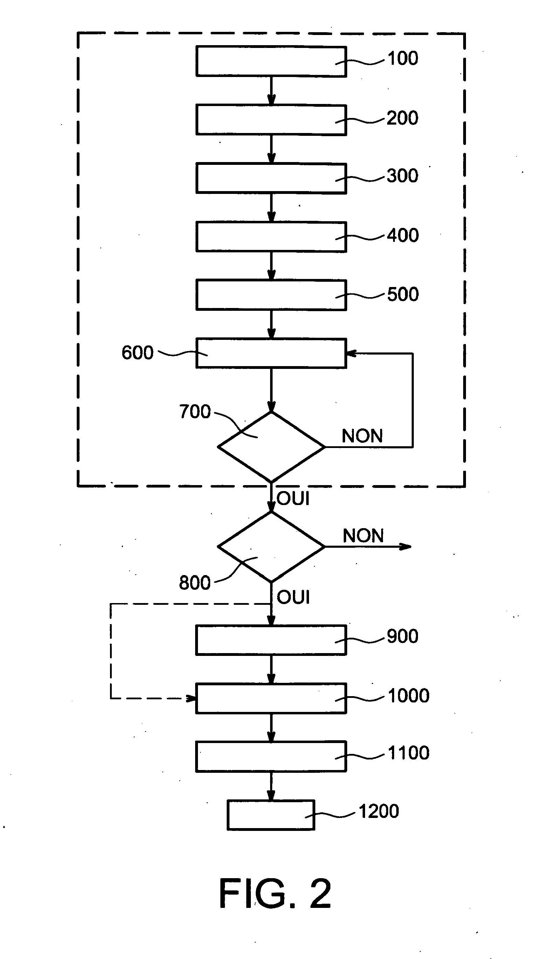

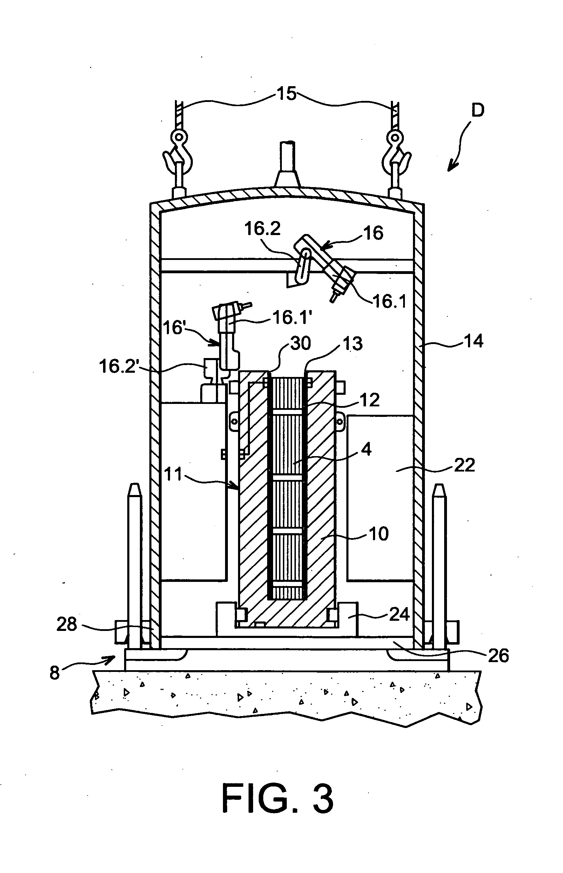

Le procédé selon la présente invention est représenté sous forme d'organigramme sur la figure 2 et prévoit notamment :
- à l'étape 100, d'immerger le container 10 dans lequel a été disposé au préalable l'étui 12,
- à l'étape 200, de remplir l'étui 12 avec le combustible irradié,
- à l'étape 300, de disposer le dispositif D au dessus de l'emballage de manière à couvrir l'emballage, une extrémité inférieure 28 du dispositif repose sur le socle 8 dans le fond de la piscine (figure 3),
- à l'étape 400, de maintien du niveau d'eau à un niveau inférieur à une extrémité ouverte 30 de l'emballage 11,
- à l'étape 500, de mise en place d'un bouchon sur l'étui et de fixation de celui-ci de manière étanche, le dispositif de fermeture comportant des moyens permettant d'extraire l'eau contenue dans l'étui, de sécher l'intérieur de l'étui et de vérifier l'étanchéité de fermeture opérée par celui-ci,
- à l'étape 600, de retrait de l'eau contenu dans l'étui,
- à l'étape 700, de vérification de l'absence d'eau dans l'étui,
- à l'étape 800, de vérification de l'étanchéité de la fermeture de l'étui.

Le dispositif D, représenté à la figure 3, comporte une cloche 14 ayant sensiblement une section en U renversé, apte à être déplacée dans la piscine de manière à pouvoir être placée au dessus de l'emballage.

La cloche peut être déplacée au moyen d'élingues 15 fixées sur une partie supérieure de la cloche et reliées à un pont mobile.

La cloche 14 comporte des moyens pour mettre en place des bouchons, des moyens pour les fixer par exemple par soudage, des moyens pour vidanger l'intérieur de l'étui, des moyens pour vérifier l'absence d'eau dans l'étui et des moyens pour vérifier l'étanchéité de la fermeture de l'étui (non représentés) en coopération avec les connecteurs du bouchon.

La cloche 14 comporte au moins un bras, deux bras 16, 16' dans l'exemple représenté, pour mettre en oeuvre les moyens cités ci-dessus.

Dans l'exemple représenté sur la figure 3, le dispositif selon l'invention comporte un bras 16' pour la mise en place des bouchons et un bras 16 pour le soudage des bouchons et la vérification de la fermeture.

Les bras 16, 16' sont, par exemple formés par deux membres allongés 16.1, 16.1', 16.2, 16.2', articulés l'un par rapport à l'autre, l'un des membres étant muni par exemple d'un moyen de préhension (non représenté), tel qu'une pince.

Les bras 16, 16' peuvent être commandés de l'extérieur par des opérateurs ou être déplacés suivant un programme informatique sans intervention extérieure.

Le bras 16' met en place les bouchons, et met avantageusement en place les tubes d'amené d'air ou d'hélium et fixe ceux-ci sur des connecteurs des bouchons.

La cloche 14 comporte avantageusement un dispositif de stockage 22 de plusieurs bouchons d'étui. Dans l'exemple représenté sur la figure 3, ce dispositif 22 est placé sur une paroi intérieure de la cloche 14. Ce stockage dans la cloche 14 évite de devoir remonter la cloche entre chaque fermeture d'étui.

De manière avantageuse, ce dispositif de stockage permet de stocker deux types de bouchon, un premier type destiné à être en contact avec le combustible nucléaire et un deuxième type comportant des moyens de préhension de l'étui et destiné à être fixé sur une face extérieure du premier bouchon.

De manière avantageuse, les deux types de bouchon sont stockés dans des dispositifs de stockage distincts.

Le socle 8 comporte des moyens pour positionner la cloche 14 et l'emballage 11 dans une position relative identique à chaque chargement d'étui 12.

Le socle 8 comporte, par exemple un logement 24 de diamètre intérieur sensiblement égal au diamètre extérieur de l'emballage 11, et un disque 26 de diamètre extérieur sensiblement égal au diamètre intérieur d'une extrémité inférieure 28 ouverte de la cloche 14, le disque 26 et le logement 24 étant dans l'exemple représenté coaxiaux.

Ainsi lorsque la cloche 14 est mise en place sur le socle 8, celle-ci occupe une position unique, de même pour l'étui 12. Il est alors possible d'automatiser le procédé de fermeture, puisque les positions de l'emballage, en particulier de l'étui et de la cloche sont toujours les mêmes ; les bras peuvent alors se déplacer suivant une commande préétablie, sans intervention d'un opérateur pendant les étapes de fermeture.

Nous allons maintenant décrire de manière détaillée les étapes particulières du procédé selon la présente invention.

A l'étape 100, l'emballage 11 est immergé et mis en place dans le logement 24 du socle 8.

A l'étape 300, le dispositif 300 est disposé par-dessus l'emballage 11, l'extrémité inférieure 28 de la cloche 14 vient se placer autour du disque 26 du socle 8. Chaque emballage 11 et la cloche 14 ont alors toujours la même position relative.

Lors de l'étape 400, le niveau d'eau est maintenu en dessous de l'extrémité ouverte 30 de l'emballage 11 par un système de mise en pression qui injecte du gaz, par exemple de l'air sous pression dans la cloche. Ainsi l'extrémité supérieure 30 de l'emballage 11 se trouve à l'air bien qu'il soit disposé dans la piscine, la fermeture de l'étui 12 peut avoir lieu dans un environnement sec tout en bénéficiant de la protection biologique accordée par l'eau.

De manière avantageuse, l'intérieur de la cloche 14 est maintenu sec en permanence par le système de mise en pression, pour limiter une détérioration éventuelle des appareillages qu'elle comporte. De plus, lorsqu'elle est mise en place sur l'emballage, le niveau d'eau est maintenu par le système de mise en pression.

Lors de l'étape 500, un premier bouchon est retiré de son dispositif de stockage 22 par le bras 16 et est disposé sur l'extrémité ouverte 13 de l'étui 12 de manière à l'obturer entièrement.

Les premiers bouchons comportent des connecteurs permettant un contrôle du séchage et permettant l'injection d'Hélium à l'intérieur de l'étui. Ces connecteurs sont du type auto-obturant, bien connus de l'homme du métier. Après injection de l'hélium dans l'étui, l'extrémité des connecteurs est soudée.

Comme nous le décrirons par la suite, ces connecteurs permettent de vérifier la présence d'eau dans l'étui et l'étanchéité de la fermeture obtenue par le bouchon après la mise en place du bouchon.

Les connecteurs permettent également de vidanger l'étui selon l'étape 600.

Ce bouchon est ensuite fixé sur l'étui 12, avantageusement par soudage. On pourrait également prévoir de visser le bouchon.

Le soudage est par exemple un soudage au tungstène (TIG).

Lors de l'étape 600, l'eau contenue dans l'étui est retirée au moyen d'une pompe connectée à l'extrémité d'un connecteur du bouchon. Il est prévu, outre l'extraction au moyen d'une pompe, le séchage de l'intérieur de l'étui par un balayage, par exemple à l'air.

On pourrait envisager de retirer l'eau avant de mettre le bouchon.

L'étui 12 est centré dans le container 10, qui est lui-même centré dans la pièce 24.

Lors de l'étape 700, il est procédé à une vérification de l'absence d'eau dans l'étui, par exemple par une mesure de remontée de pression. Cette mesure consiste à mettre l'étui en dépression et à vérifier la stabilité de la dépression.

Si la mesure montre que de l'eau persiste dans l'étui, l'étape 600 est reproduite, en particulier pour le séchage par balayage à l'air. Puis une nouvelle vérification selon l'étape 700 a lieu.

Si la mesure montre que l'intérieur de l'étui est sec, on passe à l'étape 800 de vérification de l'étanchéité de fermeture réalisée par le bouchon et la soudure. Par exemple, on injecte par un connecteur du bouchon un gaz, avantageusement de l'hélium, puis on contrôle au moyen d'un spectromètre à hélium une fuite éventuelle d'hélium au niveau de la soudure.

Si une fuite est détectée, c'est-à-dire si la soudure présente un défaut, on passe à l'étape 1300. Lors de cette étape 1300, il peut être prévu de réparer cette soudure si le défaut est petit. Sinon les opérations sont arrêtées la cloche est retirée, l'étui est également retiré de l'emballage, puis ouvert pour récupérer le combustible.

Si aucune fuite n'est détectée, on peut prévoir à une étape 900 de retirer un deuxième bouchon du dispositif de stockage, et de le fixer, par exemple par soudage, sur le premier bouchon. Ce deuxième bouchon permet la préhension de l'étui. Pour le soudage, le moyen utilisé pour souder le premier bouchon sur l'étui peut être utilisé.

Si un deuxième bouchon n'est pas fixé sur le premier bouchon, on passe directement à une étape 1000 (flèche en pointillés)

Dans une étape ultérieure 1000, la cloche est retirée.

Puis dans une étape 1100, un bouchon est mis en place sur le container.

On pourrait également envisager de mettre en place le couvercle sur le container en présence de la cloche.

A une étape 1200, le container muni de l'étui chargé est retiré de la piscine

Le dispositif de fermeture selon la présente invention comporte une cloche et tous les moyens pour mettre en oeuvre le procédé tel que décrit précédemment.

Le dispositif de fermeture comporte donc :
- une cloche,
- au moins un premier bouchon muni de connecteurs,
- un bras pour mettre en place ledit bouchon sur l'étui,
- des moyens de fixation du bouchon sur l'étui,
- des moyens de retrait de l'eau, formés par exemple par une pompe et moyens de balayage de gaz,
- des moyens de vérification du retrait total de l'eau par mesure d'une remontée de pression, et,
- des moyens de contrôle de l'étanchéité de la fermeture de l'étui sur le bouchon, par injection d'hélium et détection d'une fuite d'hélium par un spectromètre à hélium.

Ainsi, ce dispositif est complètement autonome et isolé de l'environnement extérieur par son immersion dans la piscine. Aucune fuite de rayonnement ne peut avoir lieu, puisque aucun transfert d'appareillage entre la cloche et l'environnement à l'air n'a lieu.

On peut, en outre, prévoir que le dispositif de fermeture fonctionne selon une séquence déterminée, sans intervention humaine. Au contraire, on peut prévoir que chaque étape soit pilotée par un opérateur.

La cloche mesure par exemple 2 mètres de diamètre et 3 mètres de haut.

Le dispositif de fermeture selon la présente invention permet avantageusement de ne pas utiliser de moyen lourd comme les cellules chaudes pour réaliser le conditionnement du combustible irradié.

Le dispositif de fermeture selon la présente invention offre l'avantage d'être transportable dans différents lieux, ainsi celui-ci peut servir pour plusieurs piscines, ce qui permet de réduire les coûts.

En outre, le conditionnement en piscine permet de conserver la protection biologique accordée par l'eau.

De plus, l'utilisation d'un étui disposé dans un container, rend possible l'utilisation d'un premier couvercle sans protection biologique interne. Le premier couvercle est alors de faible épaisseur. Ainsi la hauteur de l'étui est réduite, d'où il en résulte un meilleur remplissage des dispositifs d'entreposage.

## Revendications

1. Procédé de fermeture en piscine (2) d'un étui (12) contenu dans un container (10), ledit étui (12) étant chargé avec du combustible nucléaire, comportant les étapes :
- immersion de l'emballage (11) comportant le container (10) et l'étui (12), dans la piscine (2),
- chargement de l'étui (12) avec du combustible nucléaire (4),
- mise en place d'un dispositif de fermeture (D) de l'étui (12) au dessus du container (10), ledit dispositif comportant au moins un premier bouchon d'étui,
- maintien d'une pression de fluide pneumatique dans le dispositif de fermeture, de manière à maintenir le niveau de l'eau à un niveau inférieur à une extrémité ouverte (30) de l'emballage (11),
- mise en place d'un bouchon sur une extrémité ouverte (13) de l'étui (12) par un moyen contenu dans le dispositif de fermeture (D),
- vidange de l'étui (12) par un moyen de vidange contenu dans le dispositif,
- vérification de l'étanchéité de la fermeture réalisée par le bouchon,
- retrait du dispositif de fermeture (D).

2. Procédé selon la revendication 1, dans lequel lors de la vidange de l'étui (12), un retrait de l'eau au moyen d'une pompe a lieu, puis un balayage de gaz est effectué dans l'étui (12) pour sécher l'intérieur de l'étui, en fin de vidange une vérification de l'absence d'eau dans l'étui étant également avantageusement effectuée, par exemple par une mesure de remontée de pression.

3. Procédé selon la revendication 1 ou 2, dans lequel le contrôle de l'étanchéité de la fermeture comporte :
- un balayage à l'hélium de l'intérieur de l'étui et mise sous pression de l'intérieur de l'étui avec de l'hélium,
- une mise en oeuvre d'un spectromètre à hélium pour détecter une éventuelle fuite d'hélium.

4. Procédé selon l'une quelconque des revendications précédentes, dans lequel la fixation du premier bouchon s'effectue par soudage.

5. Procédé selon l'une quelconque des revendications précédentes, dans lequel un deuxième bouchon contenu dans le dispositif de fermeture, est fixé sur le premier bouchon avant le retrait du dispositif de fermeture (D).

6. Procédé selon l'une quelconque des revendications précédentes, dans lequel un bouchon est mis en place sur le container (10) après retrait du dispositif de fermeture (D).

7. Procédé selon l'une quelconque des revendications précédentes, dans lequel l'emballage (11) et le dispositif de fermeture (D) sont disposés l'un par rapport à l'autre dans une position relative déterminée.

8. Dispositif de fermeture en piscine d'un étui (12) disposé dans un container (10), ledit étui (12) étant chargé avec du combustible irradié, comportant une cloche (14) destinée à recouvrir une extrémité ouverte du container, des moyens aptes à maintenir une pression de fluide pneumatique dans la cloche de manière à maintenir un niveau d'eau à un niveau inférieur à l'extrémité ouverte (30) du container chargé de l'étui (12), ladite cloche étant destinée à contenir au moins un premier bouchon muni de connecteurs, le dispositif de fermeture comportant également des moyens (16) pour mettre en place ledit bouchon sur l'étui (12), des moyens de fixation du bouchon sur l'étui, des moyens de retrait de l'eau, des moyens de vérification du retrait total de l'eau et des moyens de contrôle de l'étanchéité de la fermeture de l'étui sur le bouchon.

9. Dispositif selon la revendication précédente, comportant un bras formant les moyens de mise en place du bouchon.

10. Dispositif selon la revendication 8 ou 9, dans lequel les moyens de retrait de l'eau comporte une pompe et un moyen pour effectuer un balayage sous gaz de l'étui (12) afin de le sécher, ladite pompe et ledit moyen de balayage étant connectables à au moins un connecteur.

11. Dispositif selon l'une des revendications 8 à 10, dans lequel les moyens de vérification de l'étanchéité comportent un moyen pour injecter de l'hélium dans l'étui (12) et un spectromètre à hélium.

12. Dispositif selon la revendication précédente, dans lequel le moyen pour injecter de l'hélium est connectable à au moins un connecteur.

13. Dispositif selon l'une quelconque des revendications 8 à 12, dans lequel les moyens de fixation sont des moyens de soudage, ces moyens étant amenés à proximité de l'étui par un bras contenu dans la cloche.

14. Dispositif selon l'une quelconque des revendications 8 à 13, comportant un dispositif de stockage de plusieurs premiers bouchons d'étui (12).

15. Dispositif selon l'une quelconque des revendications 8 à 14, comportant un dispositif de stockage de plusieurs deuxièmes bouchons destinés à être fixés sur les premiers bouchons.

## Claims

1. Method for confining a canister (12) contained in a container (10) in a cooling pond (2), wherein said canister (12) is loaded with nuclear fuel, comprising the steps of:
- immersion of the packaging (11) comprising the container (10) and the canister (12), in the cooling pond (2),
- loading the canister (12) with nuclear fuel (4),
- fitting a device for sealing (D) the canister (12) on top of a container (10), wherein said device comprises at least one first canister cap,
- maintaining a pneumatic fluid pressure in the sealing device so as to maintain the water level at a level below that of an open end (30) of the packaging (11),
- attachment of a cap onto an open end (13) of the canister (12) by means contained inside the sealing device (D),
- emptying the canister (12) by emptying means inside the device,
- verification of the sealed confinement provided by the cap,
- withdrawal of the sealing device (D).

2. Method according to claim 1, wherein when the canister (12) is emptied, the water is withdrawn using a pump, then sweeping with gas is carried out in the canister (12) to dry the inside of the canister, after emptying, a verification is carried out of the absence of water in the canister (12), for example by measuring the pressure build up.

3. Method according to claim 1 or 2, wherein the verification of the sealed confinement comprises:
- sweeping with helium of the interior of the canister and pressurising the interior of the canister with helium,
- use of a helium spectrometer to detect any helium leaks.

4. Method according to any of the previous claims, wherein the first cap is attached by welding.

5. Method according to any of the previous claims, wherein a second cap contained in the sealing device, is attached to the first cap prior to the withdrawal of the sealing device (D).

6. Method according to any of the previous claims, wherein a cap is fitted onto the container (10) after withdrawal of the sealing device (D).

7. Method according to any of the previous claims, wherein the packaging (11) and the sealing device (D) are positioned in a determined relative position with respect to one another.

8. Device for sealing a canister (12) contained in a container (10) in a cooling pond, said canister (12) is loaded with irradiated fuel, comprising a bell jar (14) designed to cover an open end of the container, with means capable of maintaining a pneumatic fluid pressure in the bell jar so as to maintain the water level at a level below that of the open end of (30) of the loaded container of the canister (12), wherein said bell jar is designed to contain at least one first cap equipped with connectors, wherein said bell jar also includes means (16) of fitting said cap onto the canister (12), means of attaching the cap onto the canister, means of withdrawing the water, means of verifying the total withdrawal of the water and means of checking the sealed confinement of the canister on the cap.

9. Device according to the previous claim, comprising an arm forming the means of fitting the cap.

10. Device according to claim 8 or 9, wherein the means of withdrawing the water comprises a pump and means of sweeping the canister (12) with gas in order to dry it, wherein said pump and said sweeping means may be connected to at least one connector.

11. Device according to one of claims 8 to 10, wherein the means of verifying the seal comprise means of injecting helium into the canister (12) and a helium spectrometer.

12. Device according to the previous claim, wherein the means of injecting helium may be connected to at least one connector.

13. Device according to any of claims 10 to 14, wherein the attachment means are welding means, these means being brought close to the canister by an arm inside the bell jar.

14. Device according to any of claims 8 to 13, comprising a device for storing several first canister (12) caps.

15. Device according to any of claims 8 to 14, comprising a device for storing several second caps designed to be attached to the first caps.

## Patentansprüche

1. Verfahren zum Verschließen einer in einem Behälter (10) enthaltenen Kapsel (12) im Wasserbecken bzw. Abklingbecken, wobei die genannte Kapsel (12) Kernbrennstoff enthält,
die folgenden Schnitte umfassend:
- Eintauchen des den Behälter (10) und die Kapsel (12) umfassenden Pakets in das Becken (2),
- Beladen der Kapsel (12) mit Kernbrennstoff (4),
- Positionieren einer Verschließvorrichtung (D) der Kapsel (12) über dem Behälter (10), wobei die genannte Vorrichtung wenigstens einen ersten Kapseldeckel enthält,
- Aufrechterhalten eines Drucks eines pneumatischen Fluids in der Schließvorrichtung, derart dass der Wasserpegel auf einem Niveau gehalten wird, das niedriger ist als ein offenes Ende (30) des Pakets (11),
- Anbringen eines Deckels auf einem offenen Ende (13) der Kapsel (12) durch eine in der Verschließvorrichtung (D) enthaltene Einrichtung,
- Entleeren der Kapsel (12) durch eine in der Vorrichtung enthaltene Entleereinrichtung,
- Verifizieren der Dichtheit des durch den Deckel realisierten Verschlusses,
- Abheben der Verschließvorrichtung (D).

2. Verfahren nach Anspruch 1, bei dem die Entleerung des Wassers aus der Kapsel (12) mit Hilfe einer Pumpe stattfindet, wobei das Innere der Kapsel (12) dann durch eine Gasspülung getrocknet wird, und am Ende der Entleerung vorteilhafterweise zum Beispiel durch eine Druckanstiegsmessung verifiziert wird, dass sich in der Kapsel kein Wasser mehr befindet.

3. Verfahren nach Anspruch 1 oder 2, bei dem die Dichtheitsprüfung umfasst:
- Spülen des Kapselinnern mit Helium und Unterdrucksetzen des Kapselinnern mit Helium,
- Anwenden eines Heliumspektrometers, um ein eventuelles Heliumleck zu detektieren.

4. Verfahren nach einem der vorangehenden Ansprüche, bei dem die Befestigung des ersten Deckels durch Schweißung erfolgt.

5. Verfahren nach einem der vorangehenden Ansprüche, bei dem ein zweiter in der Verschließvorrichtung enthaltener Deckel vor dem Abheben der Verschließvorrichtung (D) auf dem ersten Deckel befestigt wird.

6. Verfahren nach einem der vorangehenden Ansprüche, bei dem ein Deckel nach dem Abheben der Verschließvorrichtung (D) auf dem Behälter (10) angebracht wird.

7. Verfahren nach einem der vorangehenden Ansprüche, bei dem das Paket (11) und die Verschließvorrichtung (D) gegenseitig in einer bestimmten Relativposition angeordnet werden.

8. Vorrichtung zum Verschließen einer in einem Behälter (10) enthaltenen Kapsel (12) im Wasserbecken bzw. Abklingbecken, wobei die genannte Kapsel (12) bestrahlten Brennstoff enthält,
umfassend: eine Glocke (14), dazu bestimmt, ein offenes Ende des Behälters abzudecken, Einrichtungen zum Aufrechterhalten eines Drucks eines pneumatischen Fluids in der Glocke, derart dass ein Wasserpegel auf einem Niveau gehalten wird, das niedriger ist als das offene Ende (30) des mit der Kapsel (12) beladenen Behälters, wobei die genannte Glocke wenigstens einen mit Anschlüssen versehenen ersten Deckel enthält und die Verschließvorrichtung dabei auch Einrichtungen (16) zum Anbringen des genannten Deckels auf der Kapsel (12), Einrichtungen zum Entleeren des Wassers, Einrichtungen zum Verifizieren der Totalentleerung des Wasser und Einrichtungen zum Prüfen der Dichtheit des Verschlusses auf dem Deckel umfasst.

9. Vorrichtung nach dem vorangehenden Anspruch mit einem Arm, der die Anbringeinrichtungen des Deckels bildet.

10. Vorrichtung nach Anspruch 8 oder 9, bei der die Einrichtungen zum Entleeren des Wassers eine Pumpe und, zum Trocknen der Kapsel (12), eine Gasspüleinrichtung umfassen, wobei die genannte Pumpe und die genannte Gasspüleinrichtung an wenigstens einen Anschluss angeschlossen werden können.

11. Vorrichtung nach einem der Ansprüche 8 bis 10, bei der die Einrichtungen zum Verifizieren der Dichtheit eine Einrichtung zum Injizieren von Helium in die Kapsel (12) und ein Heliumspektrometer umfassen.

12. Vorrichtung nach dem vorangehenden Anspruch, bei der die Einrichtung zum Injizieren von Helium an wenigstens einen Anschluss angeschlossen werden kann.

13. Vorrichtung nach einem der Ansprüche 8 bis 12, bei der die Befiestigungseinrichtungen Schweißeinrichtungen sind, wobei diese Einrichtungen durch einen in der Glocke enthaltenen Arm in die Nähe der Kapsel gebracht werden.

14. Vorrichtung nach einem der Ansprüche 8 bis 13 mit einer Einrichtung zum Speichern von mehreren ersten Deckeln für Kapseln (12).

15. Vorrichtung nach einem der Ansprüche 8 bis 14 mit einer Einrichtung zum Speichern von mehreren zweiten Deckeln, dazu bestimmt, auf den ersten Deckeln befestigt zu werden.
